# EUROPEAN PATENT APPLICATION

(11) **EP 1 709 874 A1**
(43) Date of publication of application: **11.10.2006**
(21) Application number: 06111954.1
(22) Date of filing: 29.03.2006
(51) Int. Cl.: A23B 4/12, A23L 1/03, A23L 3/3508, B01D 61/44, C02F 1/469, A23L 1/24, A23C 19/05, A23C 9/144, A23C 19/045

(54) **Shelf-stable cold-processed food compositions and methods for their preparation**

(30) Priority: 07.04.2005 US 100487
(71) Applicant: KRAFT FOODS HOLDINGS, INC., Northfield, Illinois 60093 (US)
(72) Inventor: Loh, Jimbay P., Green Oaks, IL 60048 (US); Hansen, Tim, LaGrange, IL 60525 (US); Kelly-Harris, Sandra E., Hazel Crest, IL 60429 (US); Hong, Yeong-Ching A., Kildeer, IL 60047 (US)
(74) Representative: Smaggasgale, Gillian Helen

(57) **Abstract**

Very low pH, shelf-stable, unpasteurized food compositions with reduced sourness and methods of making same are provided. These food compositions are prepared without receiving a pasteurization or other heat treatment by acidifying a foodstuff with a membrane acidic electrodialyzed composition (ED), and/or addition of edible inorganic acids and/or or their metal acid salts, to provide very low pH values, such as pH 3.5 or lower, particularly 3.2 or lower, wherein the total organic acid content is 0.22 moles per 1000 grams of food composition or less, effective to enhance shelf-stability yet without introducing an objectionable sour taste or otherwise adversely effecting organoleptic properties of the resulting food compositions.

## Description

The present application is a continuation-in-part application of United States Patent Application Serial Numbers 10/956,907 filed October 1, 2004 (Docket 77146), which is a continuation-in-part application of United States Patent Application Serial Numbers 0/784,404 and 10/784,699 both filed February 23, 2004 (Docket 77051 and 77058) and of United States Patent Application Serial Number 941,578 filed September 15, 2004 (Docket 77039), all of which are hereby incorporated by reference.

The present invention is directed to shelf-stable food compositions and methods for their preparation. Particularly, food compositions are prepared without receiving a thermal treatment with electrodialyzed composition and/or edible inorganic acids or their acid salts in amounts effective for providing a very low pH food composition with enhanced shelf-stability and palatable reduced sourness. Preferably, the food compositions of this invention are substantially free of organic acids, and they optionally may be prepared in a low sodium salt format.

### BACKGROUND

Food manufacturers produce finished food products which ideally are both organoleptically-pleasing and sufficiently shelf-stable. In general, food preservation has been generally approached in the past, for instance, via acidulation, thermal treatment; chemical preservatives, hydrostatic treatment, refrigeration and combinations thereof. The challenge that is often faced is improving shelf life without diminishing the desirable sensory attributes, and thus the commercial value, of the food.

Food manufacturers are generally familiar with a technique known as synergistic preservation to control a wide range of microorganisms such as bacteria, yeast, and fungi. Synergistic preservation is based on the interactive, antimicrobial effects of formulation components. These effects are determined by the type and percent of acid(s) and salt(s) used in the formulation, as well as the formulation's pH and water activity (a_{w}). For instance, many pourable salad dressings in emulsion or dispersion formats also include antimycotic preservatives such as sorbic acid, sodium benzoate, potassium benzoate, and/or potassium sorbate to lengthen shelf-life. In addition, refrigeration has a known bacterio-static effect against microorganisms which are sensitive to low temperatures. Simpler techniques for food preservation which do not require attention to and coordination of many variables would be desirable.

Food processing often requires pH adjustments to obtain desired product stabilities. The direct addition of food acidulants (such as acetic acid or lactic acid) inevitably leads to significant (often negative) alterations in taste in such acidified foods. Low pH products may also result in undesirable precipitates which detract from the organoleptic quality of the food and make additional processing more difficult. For instance, with respect to food compositions which contain dairy products, such as milk and/or cheese, the use of acidification with organic acid to provide a shelf stable product leads to problems which may include,
(1) isoelectric precipitation of casein leading to grainy texture, emulsion breakdown, etc., and
(2) most importantly objectionable sour taste, which also may be referred to in terms of objectionable tartness or "acidic bite."

The sourness intensity or acidic bite of low pH (high acidity) food products makes them generally less attractive for direct consumption in quantity (e.g. lemon juice). Perceived sourness intensity generally is inversely proportional to the pH of acidic food products that are acidified with conventional acidulants (e.g., acetic acid, lactic acid, citric acid). Some highly acidic foods are also heavily sweetened to counter the intense sourness (e.g., lemonade). Others are formulated with high fat content and/or with high salt content. In some cases, those acidified products are only stable under refrigeration condition. For instance, in milder or dairy product based salad dressings, such as ranch, creamy cucumber and buttermilk flavored dressings, etc. at very low pH (e.g. <35), the sour flavor imparted by a traditional acetic acid preservation system provides a less desirable product from an organoleptic standpoint as the acidic bite imparted may be objectionable to many consumers. The sourness imparted to mild or dairy product based salad dressings becomes even more critical in reduced-calorie formulations partially due to high buffering capacity of these dairy-based products.

Reduced-calorie salad dressings, and other reduced-calorie food products, may have similar constituents as their full-calorie counterparts. However, the caloric content typically is reduced by replacement of all or part of the oil of a full-calorie formulation with higher water content. This replacement reduces overall calories, but also tends to have the undesired side effect(s) of altering the taste of the dressing and/or compromising microbial stability. Because the increased moisture level in reduced-calorie food product formulations increases the potential for microbiological activity, the demands on the microbiological stabilizing system employed in such increased-moisture reduced-calorie formulations also are increased. However, as indicated, elevating a food formulation's acid content to meet these microbiological stability demands creates other problems; as such adjustments significantly impact the formulation's tartness and flavor. U.S, Pat. No. 4,927,657 discloses what is said to be a reduced tartness salad dressing having a preservation system comprised of at least two edible acids as a complete replacement for conventional acid stabilizing systems (such as 100% acetic or lactic acid) at standard or high total levels of acid. The edible acids are buffered to an increased pH using one or more edible salts to reduce tartness. Sugar usage is also described to enhance tartness reduction. Such approach may help to reduce tartness, but increased product pH and sugar content are often undesirably related to reduced microbiological stability and increased caloric content of the acidified products, respectively. U.S. Pat. No. 5,683,737 to Erickson et al. describes a mayonnaise or dressing composition represented to have minimal objectionable acidic bite which includes a starch component and an antimicrobial amount of a partially or fully hydrolyzed glucono-delta-lactone wherein the partially or fully hydrolyzed glucono-delta-lactone is present in a concentration up to about I % by weight, the resulting composition having a pH of about 3.5 or less. The selection and the use of certain food acid(s) such as described in the above-mentioned US patents can provide minor sourness reduction in low pH food products. However, such benefit becomes insignificant in very low pH food products, particularly those has low fat content (or high moisture content). In addition, the microbiological stability of these products can only be maintained by the use of high salt content and/ or high fat content. In order to formulate low sodium products without high fat content or sweetness, a lower pH is generally required. The resulting increase in the use level of conventional acidulants such as acetic acid, lactic acid and glucono-delta-lactone to achieve a very low product pH (e.g. <3.2) typically results in objectionably high sourness. Although acceptable products may be formulated at higher pH with reduced tartness, these products are generally not microbiologically stable at low salt content and ambient temperature thus expensive refrigeration distribution must be used. U.S. Pat. Appln. Publication 2004/0170747 A1 describes a shelf stable, squeezable cheese condiment that is ambient stable and not tart at pH below 3.75. The cheese condiment contains an oil-in-water emulsion and cheese component that has been added before emulsion formation. The acidulants used are acetic acid, hydrochloric acid, malic acid, glucono-delta-lactone, lactic acid, phosphoric acid or a mixture thereof. In order to reduce fat content, U.S. Pat. Appln. Publication No. 2004/0101613 A1 describes water/on/water emulsions that are microbiologically stable. Shelf stability was defined by "no mold growth" and "no flavor loss" for at least about nine months when kept covered or sealed at ambient temperature. No challenge test (by inoculation of spoilage bacteria, yeast and mold) was performed to demonstrate or ensure microbiological stability under realistic manufacture and/or use conditions.

Food products also have been significantly thermally processed (e.g., pasteurized, or receive a more extreme thermal treatment such as retort) to provide shelf stability. Thermal processing potentially complicates production, degrades nutrition value and adds to production costs. In addition, heat sensitive food products in particular may not tolerate pasteurization or other significant heat treatment used to stabilize the foodstuff without sacrificing desirable sensory attributes thereof, e.g., taste, mouthfeel, texture, color, odor or lack thereof, etc. For instance, certain widely used non-sweetened foods containing a dairy product (e.g., milk, cheese, butter, cream, dairy proteins, etc.), such as some salad dressings, dips, spreads, sauces, fall under this category, as undesirable or diminished desirable flavor and/or mouthfeel, etc., results from a significant heat treatment thereof.

New and simple methods are desired for the preparation of shelf stable, acidified food compositions without undesirable sour off-taste, especially heat sensitive types, which do not require pasteurization treatment and/or high addition rates of sweeteners, fat, sodium salt, or other preservation agents.

### SUMMARY

The present invention is generally directed to methods for preparing food compositions without receiving a pasteurization treatment in which the food compositions are acidified to a very low pH of 3.5 or less with a membrane acidic electrodialyzed composition (ED) and/or addition of edible inorganic acids or metal salts or a mixture thereof, while total organic acid content is 0.22 moles per 1000 grams of food composition or less, effective for enhancing shelf-stability without introducing an objectionable sour taste or adversely effecting other organoleptic properties of the food compositions. In accordance with embodiments herein, food compositions with no or reduced sourness can be more conveniently manufactured with cold-processing conditions without compromising microbial stability or desired sensory attributes of the finished food composition. Also, these shelf-stable acidified food compositions having reduced sourness are obtained at significantly reduced levels of sweetener/ sweetness, fat, sodium and/or preservatives.

Clean tasting, acidic ED compositions may be prepared and used for lowering the pH of foods to 3.5 or lower. Use of edible inorganic acids or their metal acid salts is another alternative to lower the pH of the food compositions. Inorganic acids and their corresponding metal acid salts include, for example, hydrochloric acid, sulfuric acid, metal acid sulfates and the like. However, the use of these alternatives to food acidulants alone may not always eliminate or significantly reduce perceived sourness in the resulting low pH (3.5 or less) non-pasteurized foods and provide an acceptable product. Maintaining a low level of total organic acid in a given product (as consumed) is important in providing an acceptable product. Effective ingredient selection and formulation to lower organic content in finished products is needed for some formulated food products to provide acceptable products.

In one aspect, shelf-stable, high moisture (A_{w} = 0.75 or greater) food compositions having reduced sourness are provided by preparing a foodstuff with an edible acidic medium or acidulant selected from the group consisting of a membrane acidic electrodialyzed composition, an edible inorganic acid, an edible metal salt of an inorganic acid, and a mixture thereof, in an amount effective for providing a food composition with a final pH of 3.5 or less, in the absence of a pasteurization treatment, and wherein the food composition has a total organic acid content of 0.22 moles per 1000 grams of food composition or less. Methods of making these food compositions include preparing the food composition with the acidulant in amount effective for providing the food composition with a final pH of 3.5 or less, and in another aspect, and a pH of 3.2 or less.

The method is effective for providing a microbiologically stable food composition without a thermal treatment which has no objectionable sour taste or acidic bite normally associated with very low pH foods by maintaining a lower organic acid content The food composition has a total organic acid content of about 0.22 moles per 1000 grams of food composition or less, preferably a total organic acid content of about 0.12 moles per 1000 grams or less, and an A_{w} of about 0.75 or greater, in another aspect about 0.85 or greater, and in another aspect about 0.90 or greater. For prepared foods this may be obtained by ingredient selection and/or modification. More preferably, no more than necessary amount of organic acids are added to the food composition only for providing required flavor and/or taste.

Shelf-stable, cold-processed food compositions with reduced sourness which may be prepared with this general method include, for example, salad dressings, soups, mayonnaise, sauces, gravies, spreads, dips, dressings, fillings, toppings, desserts, and the like.

In one particular aspect, a shelf-stable, cold-processed salad dressing with reduced sourness and a method for preparing it are provided. The method of preparing the salad dressing without pasteurization treatment includes blending of edible oil, water, emulsifier, protein, flavor, spice, antioxidant, particulate (e.g. vegetables, fruits, herbs), color, starch, gum, sweetener, seasoning, mold inhibitor, and an acidulant selected from the group consisting of electrodialyzed composition (i.e., ED water), an edible inorganic acid, an edible metal acid salt of an inorganic acid, and mixtures thereof, in an amount effective for providing a pH of 3.5 or less, and in another aspect a pH of 3.2 or less, while total organic acid content is 0.22 moles per 1000 grams- of food composition or less, effective to provide a cold-processed shelf-stable acidified mixture. The salad dressing may comprise spoonable or pourable salad dressing compositions, including high moisture, reduced-calorie, low-fat and/ or reduced-sodium salad dressing compositions.

In another particular aspect, a shelf-stable, cold-processad viscous composition with varying consistency from thin (pourable) to thick (spoonable or cuttable) and including semi-solid (cuttable) composition with substantially reduced sourness and a method for preparing it are provided. The method includes preparing a flavored viscous composition or unflavored viscous base without pasteurization treatment comprising simple blending water, oil (optional), starch, gum, protein, emulsifier (optional) and an acidulant selected from the group consisting of electrodialyzed composition (i.e., ED water), an edible inorganic acid, an edible metal salt of an inorganic acid, and mixtures thereof, in an amount effective for providing a pH of 3.5 or less, and in another aspect a pH of 3.2 or less, while total organic acid content is 0.22 moles per 1000 grams of food composition or less, effective to provide a cold-processed shelf-stable acidified mixture. Other ingredients (e.g. flavors, colors, particulates, etc.) can be blended with unflavored viscous base to obtain various soups, dips, spreads, sauces, gravies, toppings, fillings and desserts. In another particular aspect, the viscous shelf stable, cold-processed composition is a cheese or cheese-flavored dip, spread, and sauce.

### BRIEF DESCRIPTION OF THE DRAWINGS

FIG. 1 is one example of a membrane electrodialysis system for decreasing pH.

FIG. 2 is another example of a membrane electrodialysis system for decreasing , pH.

### DETAILED DESCRIPTION

Shelf stable, non-sour tasting food compositions may be prepared without receiving a pasteurization or other forms of thermal treatment by acidifying a foodstuff with an acidulant selected from the group consisting of acidic electrodialyzed composition (i.e., ED water), an edible inorganic acid, an edible metal acid salt of an inorganic acid, and mixtures thereof, in an amount effective for providing a pH of 3.5 or less, and in another aspect a pH of 3.2 or less, while total organic acid content is 0.22 moles per 1000 grams of food composition or less, effective to provide a cold-processed shelf-stable acidified mixture having no objectionable sour taste or acidic bite. Consequently, the possible need to fortify the food composition with sweetener to offset acidic bite or excessive tartness is reduced or eliminated. As described below, an aqueous solution is used as a feed stream and is processed using membrane electrodialysis to form the ED composition. The ED composition may be used in the formulation and/or preparation of the food product, ED compositions and edible inorganic acids or corresponding metal acid salts thereof used herein are suitable for human consumption.

As used herein "pasteurization" refers to all treatments other than acidulation of a food composition sufficient to render spoilage and/or fermentation microorganisms nonviable. This term, by way of example, encompasses thermal treatments meeting the above definition, inclusive of even more robust thermal treatments (e.g., retort), and also can refer to non-thermal methods of pasteurization other than acidulation of foodstuffs, which may be non-chemical methods such as hydrostatic pressure treatment, (pulse) electrical field treatment using radio frequency (RF) energy, microwave treatment, electron beam treatment, X-ray treatment, combinations of these, and the like. "Nonviable" microorganisms are effectively inactivated (bactericidal) or inhibited (for growth). "Acidulant" refers to a pH-controlling agent which reduces pH of a food composition. "Suitable for human consumption" means free from harmful or unapproved chemical(s) or contaminants, pathogens and objectionable flavor or taste. "Shelf stable food products" generally means the preserved food products stored under ambient conditions are safe for consumption. Shelf stability is determined by safety or microbiological stability. E.g., acidified compositions are inoculated with composite cultures of *Salmonella, E. coli,* yeast and heterofermentative and homofermentative *Lactobacillus* strains; the inoculated samples are held at ambient temperature (72°F) and are analyzed for each of these strains at various time intervals. An overall reduction in initial inoculated counts for a minimum of 16 weeks is required for a product to be considered shelf stable. Acidified compositions failing to demonstrate microcidal ability against pathogens and acid-resistant spoilage bacteria strains are not considered "shelf stable" for purposes herein. ''Shelf-life'' means shelf life under ambient storage conditions. Product shelf life is determined by organoleptic or eating quality of products. Product stability is determined by safety or microbiological stability. If a refrigerated distribution and storage system is used "shelf life" and "product stability" can be extended. In a particular aspect, shelf lives of about at least six months or preferably nine to twelve months are obtained for ambient stable products.

The shelf stable, cold processed food compositions of the present invention represent a drastically simplified microstability model for foods allowing rapid formulation and preparation of food products that ensures the microbiological stability and hence shelf life of the cold processed food composition by pH management alone, and with sodium content (typically in the aqueous phase thereof) significantly reduced and only as an optional factor or preservative. This microstability model for foods prepared in accordance with aspects of this invention present a significant simplification from the existing or many commonly used ones based on multi-variates surface response models, such as those used, e.g., for salad dressing manufacture. Food products at higher acidic pH levels than those prescribed herein may require a pasteurization or more severe thermal treatment, high salt concentration and/or refrigeration to ensure microbiological stability and shelf-life of the food product. Food compositions prepared in accordance with aspects of this invention also avoid the need for expensive processing equipment used in alternative non-thermal preservation methods such as those used in hydrostatic pressure treatments of foods. The food preparation techniques in accordance with aspects of the present invention are particularly suitable for the production of certain non-sweetened, heat sensitive products (e.g., salad dressings) that can not be processed thermally without incurring undesirable flavor/quality loss or other adverse impacts on the sensory properties thereof.

In one particular aspect; a shelf stable, high moisture (Aw>0.75) food composition is preserved without receiving a pasteurization step during its manufacture by controlling the product equilibrium pH of about 3.5 or less (particularly about 32 or less, more particularly about 3.0 or less) and using an edible, low- or non-sour tasting acidulant as a pH controlling agent. The acidulant is selected from, but not limited to, an acidic electrodialyzed composition, edible inorganic acid(s), edible metal salts of inorganic acid or mixtures thereof The inventive composition is microbiologically stable under refrigerated or ambient storage conditions

**Electrodialyzed (EP) Composition.** In a preferred aspect, the food acidulant used for acidifying non-pasteurized food compositions is a clean tasting, acidic electrodialyzed . (ED) composition suitable for lowering the pH of foods. The ED composition may be generated by electrodialysis. Generally, electrodialysis (ED) is used in connection with the separation of dissolved salts or other naturally occurring impurities/ions from one aqueous solution to another aqueous solution. The separation of these dissolved salts or other impurities results from ion migration through semi-permeable, ion-setective membranes under the influence of an applied electric field that is established between a cathode (negative potential electrode) and an anode (positive potential electrode). The membranes may be selective for monovalent or multivalent ions depending on whether separation is desired between monovalent or multivalent' cations and/or anions. The separation process results in a salt or impurity concentrated stream (known as a concentrate or brine) and in a salt or impurity depleted stream (known as a diluate). The concentrate and diluate streams flow in solution compartments in the electrodialysis apparatus that are disposed between the anode and cathode and that are separated by alternating cation and anion selective membranes. The outer most compartments adjacent the anode and cathode electrodes have a recirculating electrode-rinse solution flowing therethrough to maintain the cathode and anode electrodes clean.

**Aqueous Solution.** Aqueous feed solutions which may be treated with the ED method to produce acidic ED composition include any mineral or ion rich aqueous solution obtainable from natural water sources such as spring water, well water, municipal water, sea water and/or artificially ion-enriched water free from contamination and excessive chlorination (for example, greater than about 2 ppm of free chlorine). An aqueous feed solution for ED treatment should have a total cation or total anion concentration of about 0.0001N to about 1.8N which is effective for providing an initial conductivity of about 0.1 to about 200 mS/cm. As used herein, "total cation concentration" or "individual cation concentration" means any cation (such as Na⁺, K⁺, Ca⁺⁺, Mg⁺⁺) concentration excluding hydrogen ion concentration. "Total anion concentration" or "individual anion concentration" means any anion (such as Cl⁻, F⁻, SO₄⁻², PO₄⁻³ concentration excluding hydroxyl ion concentration. Ion concentrations may be determined using techniques known in the art, such as for example, inductive coupled plasma atomic emission spectroscopy for selected cations and ion chromatography for selected anions.

In an important aspect, the aqueous feed solution to be treated with ED may have a total cation or total anion concentration of about 0.002N to about 1.0N which is effective for providing an initial conductivity of about 1.0 to about 30 mS/cm. For example, the aqueous solution to be treated with ED may include at least one of the following:

| **Cations:** | **Concentration (N)** |
|---|---|
| calciuin | 0-02 |
| magnesium | 0-0.002 |
| potassium | 0-0.01 |
| sodium | 0-1.7 |
| **Anions:** | |
| bicarbonate | 0-0.07 |
| chloride | 0-1.7 |
| sulfate | 0-0.01 |

All ion concentrations can not be zero as the total ion concentration must be about 0.002N to about 1.0N. Other non-toxic, edible ions may also be included.

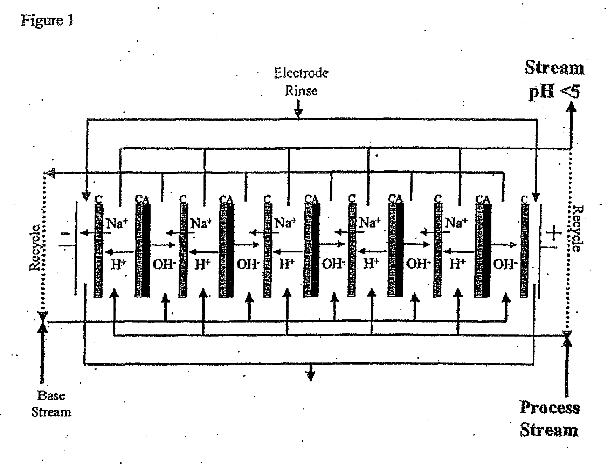

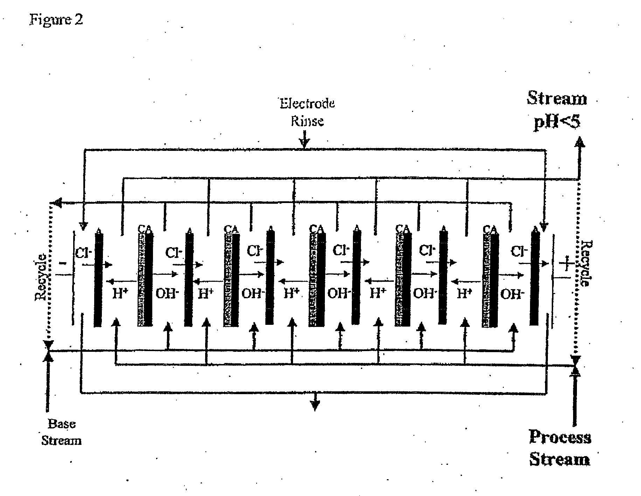

**Membrane Electrodialysis.** As illustrated in Figures 1 and 2, membrane electrodialysis may be conducted using a bipolar membrane and anionic or cationic membranes. The membranes are disposed between a cathode and anode and subjected to an electrical field. The membranes form separate compartments and materials flowing through those compartments may be collected separately. An example of an electrodialysis apparatus containing ion-selective membranes is EUR6 (available from Eurodia Industrie, Wissous, France). Suitable membranes are available, for example, from Tokuyama (Japan). A bipolar membrane includes a cationic membrane and an anionic membrane joined together.

In accordance with one aspect, an aqueous solution is contacted with the ion-selective membranes. Aqueous solutions may be processed in a batch mode, semi-continuous mode, or continuous mode by flowing an aqueous solution over the ion-selective membranes. An electrical potential is applied across the anode and cathode for a time effective for providing an electrodialyzed solution with the desired pH and ion concentrations. Processing times in batch mode and flow rates in semi-continuous mode or continuous mode are a function of the number of ion-selective membranes that are used and the amount of electrical potential applied. Hence, remiting ED solutions can be monitored and further processed until a desired pH and ion concentration is achieved. Generally, an electrical potential of about 0.1 to about 10 volts is provided across the anode and cathode electrode in each cell.

As shown in Figures 1 and 2, the pH of the aqueous solution may be adjusted to a pH range of about 0 to about 7 by contacting the aqueous solution with at least one, preferably a plurality of bipolar membranes that includes cationic membranes on both sides of the bipolar membrane. Materials from the compartments to the left of the bipolar membranes are collected for subsequent use. Materials collected from the compartments to the right of the bipolar membranes may be recirculated back through the membranes or circulated to a second membrane electrodialysis as many times as needed to provide an aqueous solution having a pH of about 0 to about 7, preferably, about 1 to about 5. Materials from the compartments to the left of the bipolar membranes may also be recirculated back through the membranes. Materials from the compartments adjacent to the anode and cathode may be recirculated back through the membranes.

**Electrodialyzed Composition Product.** After treatment with membrane electrodialysis, the pH altered ED composition has a total cation or anion concentration of less than about 1.0N, a concentration of any individual ion of less than about 0.6N and a free chlorine content of less than 2 ppm. In a preferred embodiment, the ED composition has a total cation concentration or anion concentration of less than about 0.5N, individual cation or anion concentration of less than 0.3N, and a free chlorine content of less than 1 ppm. For example, the electrodialyzed composition product may contain at least one of the following:

| **Concentration (N)** | |
|---|---|
| **Cations:** | |
| calcium | 0-0.1 |
| magnesium | 0-0.001 |
| potassium | 0-0.005 |
| sodium | 0-09 |

| **Anions:** | |
|---|---|
| bicarbonate | 0-0.04 |
| chloride | 0-0.9 |
| sulfate | 0-0.005 |

Other edible, edible ions may also present limited mainly by the taste impact of the individual ions.

After treatment with membrane electrodialysis, ED compositions will have a pH ranging from about 1 to about 3-5. Treated solutions have a free chlorine content of less than 1 ppm and do not have objectionable tastes and/or odors. ED compositions may be used in the preparation a wide variety of shelf-stable cold-processed food products.

**Edible Inorganic Acids and Salts Thereof.** Use of edible inorganic acids or their acid salts is another alternative as the food acidulant used to lower the food pH without introducing unacceptable sourness to the acidified product. Inorganic acids include edible mineral acids, such as hydrochloric acid, sulfuric acid, etc., and their edible metal acid salts, such as metal acid sulfates (e.g., sodium bisulfate, potassium bisulfate) and the like. However, the use of these alternatives to food acidulants alone may not always eliminate or significantly reduce perceived sourness in the resulting low pH (3.5 or less) foods and provide an acceptable product. Maintaining a low level of total "organic" acid in a given product (as consumed) is important in providing an acceptable product. Effective ingredient selection and formulation to lower organic content in finished products is needed for some formulated food products to provide acceptable products.

**Total Organic Acid Content.** Total organic acid content in a food product can influence the perceived sourness intensity. The "organic acids" in a preserved food mainly come from (1) the added edible food acidulants including, but not limited to, acetic acid, adipic acid, citric acid, fumaric acid, gluconic acid, lactic acid, malic acid, phosphoric acid and tartaric acid and (2) Natural occurring organic acids in food ingredients. Organic acids in food ingredients normally exist in form of metal salts of the organic acid (e.g. calcium citrate) which do not impart a sour taste at high pH but will definitely contribute to perceived sourness at very low pH (e.g. less than about 3.2) as metal salts of organic acid convert into corresponding acid form (e.g. citric acid).. Thus "total organic acid content" is defined practically hereafter as the sum of all the above-mentioned food acidulants and all natural occurring organic acids (including those not mentioned above such as oxalic acid, succinic acid, ascorbic acid, chlorogenic acid and the like). An organic acid profile can be readily obtained using appropriate analytical method such as S. Rantakokko, S. Mustonen, M. Yritys, and T. Vartiainen. Ion Chromatographic, Method for the Determination of Selected Inorganic Anions and Organic Acids from Raw and Drinking Waters Using Suppressor Current Switching to Reduce The Background Noise from Journal of Liquid Chromatography and Related Technology (2004); 27, 821-842. The quantity of individual organic acids can be measured and summed up to give "total organic acid content" which is conveniently expressed in "moles per 1000 grams of finished food composition". Phosphoric acid, technically, speaking an inorganic acid, is counted in the total "organic" acid content hereafter due to its high pKa (about 2.12) relative to that of other food approved inorganic acids (e.g. hydrochloric acid, sulfuric acid). Within the pH range (i.e. 2.0 to 3.5) and the context of the present invention, phosphoric acid can significantly contribute to sour taste of the acidified composition and is generally unacceptable as a non-sour acidulant.

The inventive compositions may be characterized by a low level of total organic acids of below-about 0.22 mole per 1000 g of final food products, particularly below about 0.12 mole per 1000 g of final food products, and more particularly below about 0.06 mole per 1000g of final food products.

**Optional Additives.** Optionally, the present invention also provides formulation flexibility to allow drastic sodium reduction (e.g. 30% or more, relative to commercial fully salted product) without compromising microbiological stability, since salt is no longer a primary preservation factor. In the inventive food composition, salt or sodium content may be determined solely based on taste requirement independent of microbiological stability. In one aspect, sodium content in the acidified shelf-stable cold-processed food composition does not exceed 0.5 moles per 1000 g, particularly 0.3 moles per 1000 g, and more particularly 0.1 moles per 1000 g, of acidified food composition depending on fat content. The weight of aqueous phase is defined as total weight of composition minus fat content. The inventive food composition may further include an edible mold inhibitor such as sorbic acid/sorbate or benzoic acid/ benzoate at a level of about 0.05% or greater in the said food composition. Other functional and/or flavoring ingredients unrelated to microbiological stability of the composition also may be included at levels and to the extent they do not lead to acidic bite or other undesirable sensory properties in the finished food product. These optional ingredients may include, but not limited to, starch, gum, fiber, protein, natural or artificial flavor, extract, juice, natural or intense sweetener, emulsifier, antioxidant, spice, herb, vitamins, mineral, phytochemical and small particulates of fruit, vegetable, meat (e.g. bacon), fish (e.g. anchovies), and the like.

**Preparation of Shelf-Stable Food Compositions.** As indicated, the acidulant comprising ED composition, an edible inorganic acid or their metal acid salts, or mixtures thereof, is useful for preservation of formulated foods without receiving a pasteurization treatment. More specifically, in one aspect, these acidulants, e.g., ED composition, may be formulated into a food product by complete or partial substitution for the water normally present in the formula. The shelf-stable cold-processed food compositions characterized by a significantly reduced sourness when prepared according to aspects of this invention include, but are not limited to, dressings (e.g., salad dressings), mayonnaise, sauces, gravies, spreads, dips, dressings, fillings, toppings, marinates, desserts, and mixtures thereof. The inventive food compositions comprise a pourable or spoonable viscous-phase which may include food components or ingredients from sources selected, for example, from dairy, starch/cereal egg, meat, sea food, fruit and vegetable and mixture thereof, in multicomponent product.

The acidified food product is shelf-stable and does not require a significant thermal treatment, such as a pasteurization step, to achieve such stability. The preserved food products have no objectionable sour taste or off-flavors commonly associated with the use of food acidulants (i.e., organic acids) and are stable under ambient conditions for at least 6 months but generally in the order of 9 to 12 months.

Generally, shelf-stable food compositions are prepared using ED compositions having a pH of about 0.5 to about 3.0, and particularly about 1.0 to about 2.0. The ED composition is directly incorporated into the preparation of the food composition. In one aspect, cold-processing conditions are maintained during the preparation of the food product by controlling the food temperature to a value less than about 165°F, particularly less than 120°F. A small amount of conventional food acidulant(s) such as vinegar, may still be used mainly for flavor and/or taste purposes as long as the total organic acid content does not exceed 0.22 moles per 1000 grams of final food product% preferably does not exceed 0.12 moles per 1000 grams of final food products, and more preferably does not exceed 0.06 moles per 1000 grams final product. For food compositions normally expected to be sour (e.g. cultured dairy products, fruit flavored products), the sourness of these food compositions after further acidified to a pH of 3.5 or less can be significantly reduced by completely or partially acidified the food compositions using ED composition, inorganic acid or mixture thereof as long as the total organic acid content in finished food compositions can be kept below 0.22 moles per 1000 grams of the finished food compositions.

As salt or sodium content is no longer a major factor in ensuring shelf stability in a low pH regime (e.g., 3.5 or less) and non-thermally processed (e.g., non-pasteurized) product, any level of sodium reduction is possible (e.g. unsalted, lightly salted). Thus, the principles of the present invention can also be used to provide nutritionally improved food products. Additional nutrition improvements are possible with the present invention by lowering sourness masking ingredients such as sweetener and/or fat. In one non-limiting aspect, food compositions with reduced sourness can be prepared in accordance with this invention containing total sweeteners in amount less than 3% sucrose sweetness equivalent, and particularly less than 1.5% sucrose sweetness equivalent. As will be appreciated, the amount and types of sweetener(s) used can vary depending on the food category. In another aspect, the shelf-stable food compositions with reduced sourness can be formulated as reduced-fat or low-fat compositions in accordance with this invention, even though the relative moisture content of the reduced-fat foodstuffs generally may be greater than their full-fat counterparts.

**Preparation of Salad Dressing.** Shelf-stable, cold-processed salad dressings with reduced sourness may be prepared, without a pasteurization step, by blending all ingredients including edible oil; food grade emulsifier, starch, gum, egg, water, salt, spices, protein, natural or artificial flavor, extract, juice, natural or intense sweetener, fiber, antioxidant, spice, herb, vitamins, mineral, phytochemical and small particulates of fruit, vegetable, meat, fish, and the like, and ED composition (or hydrochloric acid, sulfuric acid, sodium bisulfate, potassium bisulfate) in an amount effective for providing a pH of 3.5 or less, and in another aspect a pH of 3.2 or less, white total organic acid content is 0.22 moles per 1000 grams of food composition or less, effective to provide a cold-processed shelf-stable acidified mixture. The salad dressing may comprise salad dressing compositions with different consistency ranging from pourable to spoonable. The said salad dressing compositions may also include high moisture, reduced-calorie low-fat and reduced-sodium spoonable or pourable salad dressing compositions. The emulsion forms of the salad dressings generally are oil-in-water emulsions. The emulsified salad dressing formulations include milder or dairy product based salad dressings, such as ranch, creamy cucumber and buttermilk flavored dressings, etc. In lieu of an emulsion, the salad dressing also may be formed as a dispersion. Dispersion type salad dressings include, for example, Italian and Catalina dressings

The salad dressings also can optionally include various other seasoning additives such as salt, spices, dairy flavors, cheese flavors, sweeteners, flavoring organic acidulant, and other ingredients imparting taste characteristics to the composition. Also, preservatives, colors (not simulating egg yolk color), and stabilizers may be included.

Dairy products, for instance, milk, buttermilk, milk concentrates (dry, liquid, or paste), butter, cheese, cheese flavors, whey powder/protein concentrates/isolates, and combinations thereof also may be include in respective amount effective to impart a desired flavor component, texture, mouthfeel, or aroma note.

The oil ingredient can be any edible triglyceride oily lipid, and particularly may be an edible vegetable oil, such as soybean oil, canola oil, safflower oil, corn oil, sunflower oil, peanut oil, olive oil, cottonseed oil, and mixtures thereof. In salad dressing type products, the vegetable oil content is about 0.1 to about 40%, particularly about 0.5% to about 30%. Hard fat ingredients, such as food grade fats like butterfat, palm kernel oil and cocoa butter, optionally may be included in minor amounts, to the extent they can be emulsified or dispersed in the product. A portion of the vegetable oil may be replaced by a starch base and/or gum while maintaining the product at a desirable viscosity

If the salad dressing is formed as an emulsion, a synthetic or non-egg food grade emulsifier and/or egg product can be used for that junction. The egg product includes egg yolk, egg whites, and albumen. Non-egg emulsifiers may be, for example, polyoxyethylene sorbitan fatty acid esters, which may have a hydrophillic-lipophillic balance (HLB) of 10-18, such as polyoxyethylene sorbitan monostearate (e.g., polysorbate 60), polyoxyethylene sorbitan monooleate (e.g., polysorbate 80). The amount of non-egg-food grade emulsifier may vary depending on the amount of egg yolk co-present in the same formulation but generally may range from about 0.05% to 0.5%.

The total water content may vary depending on the type of salad dressing product being manufactured. The water content generally may range, for example, from about 5% to about 85% (including water contributed by all ingredients), particularly from about 15% to about 30%.

Any one of a number of commonly-available or otherwise suitable food-grade starches may be employed in the salad dressings. Examples include starches derived from corn, sorghum, tapioca, wheat, and so forth. These starches may be modified to improve rheological properties by oxidation, acid-catalyzed conversion, and/or cross-linking by organic or inorganic chemicals, and the like. These need not be freeze-resistant starches. The amount of starch base added to a particular formulation may vary depending on the amount of vegetable oil being used and replaced by the starch, in the formulation.

As suitable edible flavoring acidulants used in the salad dressing products, acetic acid such as in the form of vinegar, citric acid such as in the form oflemon or lime juice, or malic acid, and so forth, may be used in small amounts effective for that purpose to the extent no objectionable sourness intensity is imparted and the total organic acid content does not exceed 0.22 mole per 1000 grams of acidified composition.

Other flavoring and spices which may be used may include, for example, salt, mustard or mustard oil, pepper, egg flavors, paprika, yeast extract, flavor enhancers, and mixtures thereof The flavorings and spices are generally present in an amount of about 0.5% to about 8%. Of these, salt may be present in an amount of about 0.5% to about 3%.

As other optional additives, gums may be included as surfactants. The gums may be selected from among xanthan gums, alginates, pectins, gum tragacanth, locust bean gum, guar gum, gum arabic, and mixtures thereof. The amount of gum added may range from about 0.1 % to about 2%. Preservatives such ethylenediamine tetracetic acid or a salt thereof, sodium benzoate, and monosodium glutamate, and/or antimicrobial agents such as potassium sorbate, and may be included in amount of 0.05% to about 0.12%. Colors also may included, such as whitening agents like titanium dioxide. As with other food compositions, consistency in taste, textural appearance, and mouthfeel, for example, in the salad dressing products can be important for maintaining consumer satisfaction.

Standard blending and homogenizing procedures have been used to prepare viscous emulsified or dispersed salad dressing products.

This invention also encompasses shelf stable cold-processed mayonnaise type products which generally have higher oil levels but otherwise comparable formulations as salad dressings. The mayonnaise product is a spoonable non-pourable semi-solid material. The food composition also may be a sauce. Sauces include those containing about 5 to about 70% oil, butter, and/or cream, which may include, for example, Sauce Hollandaise and Sauce Carbonara. The-food composition also may be a creamy dessert, such as a dispersion containing from 5 to 50% oil and 0.1 to 50% sugar.

**Preparation of Cheese Composition.** Shelf-stable, cold-processed pourable, spreadable, spoonable and/or cuttable cheese compositions with reduced sourness can be prepared without a pasteurization step or treatment comprising blending cheese (e.g., natural cheese, process cheese, soy cheese, and/or cheese analog), emulsifier, water, fat/ oil, starch, gum maltodextrin, chelating agent, salt, flavor, color, seasoning, edible particles and ED composition (or hydrochloric acid, sulfuric acid, sodium bisulfate, potassium bisulfate) in an amount effective for providing a pH of 3.5 or less, and in another aspect a pH of 3.2 or less, while total organic acid content is 0.22 moles per 1000 grams of food composition or less, effective to provide a cold-processed shelf-stable acidified mixture. For purposes herein, "pourable" refers to a product consistency or rheology similar to that of table syrup; "spreadable" refers to a product consistency or rheology similar to that of fruit jam; "spoonable" refers to a product consistency or rheology similar to that of mayonnaise; and "cuttable" refers to a product consistency or rheology similar to that of soft cheese. The pourable or spoonable cheese composition may be a cheese spread, cheese dip, cheese sauce, and the like. Standard blending, dispersing and homogenizing procedures may be used to prepare viscous emulsified or dispersed cheese compositions containing these ingredients, Order of addition may be optimized.to aid proper dispersion of all ingredients. High-shear/ pressure homogenization step is generally not needed. Ingredients with particles such as salsa, Jalapeno pepper, bacon bits are added last to preserve particle integrity.

Shelf stable cheese-flavored pourable, spoonable or cuttable compositions with reduced sourness can be prepared in similar manner without a pasteurization step or treatment comprising blending cheese emulsifier, water, fat/ oil, starch, gum maltodextrin, chelating agent, salt, flavor, color, seasoning, edible particles (e.g. herbs, vegetables) and ED composition (or hydrochloric acid, sulfuric acid, sodium bisulfate, potassium bisulfate) in an amount effective for providing a pH of 3.5 or less, and in another aspect a pH of 3.2 or less, while total organic acid content is 0.22 moles per 1000 grams of food composition or less, effective to provide a cold-processed shelf stable acidified mixture.

**Preparation of Shelf Stable Dips.** Self-stable, cold-processed dips with reduced sourness may be prepared, without a pasteurization step, by blending all ingredients including water, edible oil, food grade emulsifier, starch, gum, egg, water, salt, spices, protein, natural or artificial flavor, extract, juice, natural or intense sweetener, fiber, antioxidant, spice, herb, vitamins, mineral, phytochemical and small particulates of vegetable, meat, fish, and the like and granular sodium acid sulfate (Jones-Hamilton Co. Walbridge, OH), ED composition, hydrochloric acid or other metal bisulfate in an amount effective for providing a pH of 3.5 or less, and in another aspect a pH of 3.2 or less, while total organic acid content is 0.22 moles per 1000 grams of food composition or less, effective to provide a cold-processed shelf-stable acidified mixture. The shelf stable cold processed dips may also include high moisture, reduced-calorie, reduced fat, reduced sodium and/ or reduced sweetness formulations. The emulsion forms of the dips generally are oil-in-water emulsions. The emulsified dips formulations include any flavored options, such as Cheddar, Nacho, Salsa con Queso, etc. and may vary in consistency, color, etc.

The dips also can optionally include various other seasoning additives such as salt, spices, dairy flavors, cheese flavors, sweeteners and other ingredients imparting taste characteristics to the composition. Also, preservatives, stabilizer and nutrients may be included.

All percentages, ratios, parts, and amounts used and described herein are by weight unless indicated otherwise. The examples that follow are intended to further illustrate; and not limit, embodiments in accordance with the invention.

### EXAMPLES

### EXAMPLE 1: Lightly Salted, Shelf Stable Ranch Dressing Acidified With ED Composition

A batch of Ranch dressing (9080 gram, pH 3.04 after preparation) was prepared without a pasteurization treatment in a pilot scale production facility. Electrodialyzed (ED) composition (pH=1.0), a dry preparation (buttermilk powder, sugar, salt, EDTA, sorbic acid, starch, and gum) and egg were first mixed in the proportions indicated below in a Hobart mixer (standard mixing paddle). Vegetable oil was added slowing while mixing to form a coarse emulsion. Spice and vinegar were added last. The resulting mixture was homogenized using Hydroshear at 180 psi to form a homogenous product, which had not been pasteurized during the preparation of the salad dressing.

| Ingredient | Weight% |
|---|---|
| ED composition | 41.72 |
| Soybean oil | 41.542 |
| Buttermilk powder | 4.00 |
| Xanthan gum | 0.08 |
| Starch | 1.68 |
| Sorbic acid | 0.20 |
| EDTA | 0.007 |
| Salt | 0.50 |
| Sugar | 1.50 |
| Seasoning | 3.00 |
| Egg & Egg yolk | 2.70 |
| Vinegar (120 grain) | 0.80 |
| Paprika, spice conc. | 0.008 |
| Oleoresin black pepper | 0.0030 |
| Other spices | 2.26 |
| Total | 100.00 |

Sensory evaluation of the product dressing revealed that it bad no objectionable sour taste and was excellent in flavor, texture and emulsion stability. To evaluate the microbiological stability of the acidified salad dressing composition, an approximately 25 pound sample thereof was aseptically divided into 4 sterile containers of substantially equal portions. One portion served as a negative control. The other three samples were inoculated with a composite culture of *Salmonella, E. coli* O157:H7 and various spoilage organisms comprised of yeast and heterofermentative and homofermentative *Lactobacillus* strains. A cell suspension was prepared for each pathogen strain used in the inoculum. The pathogen strains were propagated in Trypticase Soy Broth for 24 hours at 35°C. Cell suspensions were mixed to prepare an inoculum which contained approximately equal numbers of cells of each strain. The number of viable cells was verified by plate count methods with Trypticase Soy Agar incubated for 24 hours at 35°C. The inoculation level was a recoverable level of approximately 1,000 colony forming units per gram for each strain. The inoculated samples and control were held at 72°F for at least 16 weeks. The inoculated samples were analyzed for each of the above-identified strains at various time intervals. A 25 g sample from each of the control and the 3 inoculated portions was analyzed by plate count methods at predetermined time periods. Samples of the control were analyzed initially for aerobic plate count by plate count methods. The samples inoculated with *Salmonella* and *E*. *coli* O157:H7 were analyzed initially at (0 days), 1,2,3,7 and 14 days. Inoculated samples were analyzed for *Salmonella* by plate count and BAM enrichment, and for *E*. *coli* O157:H7 by plate count and cultural enrichment. Salmonella was analyzed using an XLD medium and incubation time/temperature/atmosphere of 1 day/35°C/aerobic, and *E. Coli* OI57:H7 was analyzed using an MSA medium and incubation time/temperature/atmosphere of 1 day/35°C/aerobic. Once populations decrease to <10 cells per gram by direct plating, enrichment only was utilized.. When three consecutive negative enrichments occurred, plating and enrichments were discontinued. The samples inoculated with the various spoilage organisms were analyzed initially at (0 days) and at weeks 2,4, 6, 8, 12, 16 and 9 months. The control sample was analyzed for aerobic bacteria and inoculated samples were analyzed for yeast, heterofermentative lactobacillus and homofermentative *Lactobacillus.* An overall reduction in initial inoculated counts for a minimum of 16 weeks was observed. The microbiological results indicated that the inventive dressing effectively inactivated (bactericidal) and inhibited (for growth) all inoculated microorganisms.

### EXAMPLE 2: Lightly Salted Shelf Stable Fat-free Italian Dressing Acidified With ED

A shelf stable, non-sour, 50% salt reduced, fat free Italian salad dressing was prepared without a pasteurization treatment in a pilot scale production facility. The salad dressing had the composition described below. Electrodialyzed (ED) composition (pH=1.0), tap water, a dry preparation (31.2,% salt, 31.2% cheese/dairy ingredients, 21.6% flavors/spices, 10.7% xanthan gum, 5.3% preservatives) and wet mix (76.8% corn syrup, 23.2% flavors/spices/colors) were mixed in a Breddo mixer to sufficiently disperse all dry ingredients (about 5 minutes) without applying any heat or damaging spice particles. Preliminary inoculation test results indicated that the dressing is stable under ambient storage condition. With reduced sourness and saltiness, the shelf stable dressing had excellent organoleptic quality and nutritional profile. Finished product pH is 3.5.

| Ingredient | Weight % |
|---|---|
| ED composition | 30 |
| Tap water | 47 |
| Dry preparation | 5 |
| Wet mix | 18 |
| Total | 100 |

### EXAMPLE 3: Shelf Stable Cheese Composition Acidified With Sodium Bisulfate

Two shelf stable, non-sour, cheese compositions were prepared without a pasteurization treatment in a pilot scale production facility. The two cheese compositions had the formulations described below. Portion of the formula water (about 1/3) was first mixed with egg yolk in a Hobart mixer to form a slurry. One third of cheese powder, sodium bisulfate, other dry ingredients and rest of formula water (about 2/3) were then added and mixed again to form an aqueous mixture. Separately, polysorbate was mixed and heated with small amount of soybean oil to dissolve polysorbate in oil. Gums were added to oil/polysorbate mixture and mixed to wet the surface of gum particles to form an oily mixture. The oily mixture was added into Hobart mixer and mixed with aqueous mixture (about 3 minutes) and all flavor ingredients. The rest of soybean oil was slowly added while mixing for about 3 minutes. The rest of cheese powder and the remaining ingredients were slowly added to the mixture and mixed for about 5 mimutes or sufficient to disperse all dry ingredients without applying any heat. Salsa or Jalapeno puree was added for about one more minute before filling the product into suitable container. Final product pH was 3.48.

| **Shelf Stable Nacho Cheese Dip** | |
|---|---|
| Ingredient | Weight % |
| Water | 53.674 |
| Egg Yolks | 2.94 |
| Salt | 1.27 |
| Sodium bisulfate | 1.03 |
| Ca-Disodimn EDTA | 0.006 |
| Starch | 3.92 |
| TiO₂ | 0.20 |
| Xanthan gum | 0.44 |
| MSG | 0.39 |
| Potassium sorbate | 0.20 |
| Maltodextrin | 14.70 |
| Polysorbate 60K | 0.15 |
| Soybean oil | 11.76 |
| Cheese powders* | 6.74 |
| Cheese flavors | 0.58 |
| Jalapeno Puree | 2.00 |
| Total | 100.0 |

| | |
|---|---|
| * Colored and uncolored | |

| **Shelf Stable Salsa con Queso Cheese Dip** | |
|---|---|
| Ingredient | Weight % |
| Water | 43.815 |
| Egg Yolks | 2.40 |
| Salt | 1.04 |
| Sodium bisulfate | 0.84 |
| Ca-Disodium EDTA | 0.005 |
| Starch | 3.20 |
| TiO₂ | 0.16 |
| MSG | 0.32 |
| Potassium sorbate | 0.16 |
| Maltodextrin | 12.00 |
| Polysorbate 60K | 0.12 |
| Soybean oil | 9.60 |
| Xanthan gum | 0.36 |
| Cheese powder* | 5.50 |
| Cheese flavors | 0.48 |
| Chunky Salsa | 20.0 |
| Total | 100.0 |

| | |
|---|---|
| *Colored and uncolored | |

### EXAMPLE 4: Shelf Stable Fat-free Vegetable Dip Acidified With Sodium Bisulfate

A shelf stable, sourness-reduced, fat-free vegetable dip was prepared without a pasteurization treatment in a pilot scale production facility. The dip had the composition described below. Water, sodium bisulfate and corn syrup were mixed in a Hobart mixer for about 5 minutes. All other dry ingredients were added and mixed for another 3 to 8 minutes. Spices, dry (red and green) bell pepper, color and flavors were added and mixed well for about additional 5 minutes. The final product pH was 2.88.

| | |
|---|---|
| **Shelf Stable, fat-free Vegetable Dip** | |
| Ingredient | Weight % |
| Water | 60.52 |
| Corn syrup | 11.60 |
| Sodium bisulfate | 0.80 |
| Salt | 2.00 |
| Citric acid | 0.60 |
| Xanthan gum | 0.60 |
| Maltodextrin | 12.00 |
| MSG | 0.50 |
| Potassium sorbate | 0.20 |
| Onion Powder | 0.15 |
| Garlic powder | 0.15 |
| Starch | 4.70 |
| NFDM | 4.00 |
| Natural dairy flavors | 0.03 |
| Sour cream flavor | 1.30 |
| TiO₂ | 0.25 |
| Dry green bell pepper | 0.30 |
| Dry red bell pepper | 0.30 |
| Total | 100.0 |

### EXAMPLE 5: Shelf Stable Fruit Spread Acidified With Sodium Bisulfate

A shelf stable, soumess-reduced fruit spread or dessert was prepared without a pasteurization treatment in a pilot scale production facility. The spread had the composition described below. Portion of the formula water (about 1/3) was used to create egg yolk slurry in a Hobart mixer. Sodium bisulfate and corn syrup were then added and mixed with subsequent addition of xanthan gum, potassium sorbate, citric acid, maltodextrin, MSG and salt for total about 5 minutes. Separately, polysorbate was mixed and heated with small amount of soybean oil to dissolve polysorbate in oil. Gums were added to oil/polysorbate mixture and mixed to wet the surface of gum particles to form an oily mixture. The oily mixture was added into Hobart mixer and mixed with aqueous mixture (about 3 minutes) and all flavor ingredients. The rest of soybean oil were added slowly while, mixing for about 3 minutes. Strawberry puree was then added and mixed well were added for about additional 5 minutes. The final product pH was 2.92.

| **Shelf Stable, Fruit Spread** | |
|---|---|
| Ingredient | Weight % |
| Water | 39.345 |
| Corn syrup | 21.50 |
| Sugar | 7.00 |
| Sodium bisulfate | 0.65 |
| Egg yolk | 1.00 |
| Salt | 0.35 |
| Citric acid | 0.40 |
| Ca-Disodium EDTA | 0.005 |
| Starch | 3.00 |
| Polysorbate 60K | 0.05 |
| NFDM | 4.40 |
| Potassium sorbate | 0.20 |
| Xanthan gum | 0.40 |
| Soybean oil | 4.50 |
| TiO₂ | 0.20 |
| Strawberry Puree | 17.00 |
| Total | 100.0 |

While the invention has been particularly described with specific reference to particular process and product embodiments, it will be appreciated that various alterations, modifications and adaptations may be based on the present disclosure, and are intended to be within the spirit and scope of the present invention as defined by the following claims.

## Claims

1. A method for preparing a very low pH, shelf-stable, unpasteurized food composition with reduced sourness comprising preparing the food composition with an acidulant selected from the group consisting of a membrane acidic electrodialyzed (ED) composition an edible inorganic acid, an edible metal acid salt of an inorganic acid, and a mixture thereof in an amount effective for providing a food composition with a final pH of 3.5 or less, in the absence of a pasteurization treatment, and wherein the food composition has a total organic acid content of 0.22 moles per 1000 grams of food composition or less.

2. The method of claim 1 wherein the provided food composition has a final pH of 3.2 or less.

3. The method of Claim 1 or 2 wherein the food composition is maintained in a temperature range of less than about 165°F throughout said preparing thereof.

4. The method of any one of Claims 1 to 3 wherein the food composition is maintained in a temperature range of less than about 120°F throughout said preparing thereof.

5. The method of any one of Claims 1 to 4 wherein the food composition has an A_{w} of 0.75 or greater.

6. The method of any one of Claims 1 to 5 wherein the food composition has an A_{w} of 0.85 or greater.

7. The method of any one of Claims 1 to 6 wherein the food composition has a total organic acid content of 0.12 moles per 1000 grams of food composition or less.

8. The method of any one of Claims 1 to 7 wherein the food composition has a total organic acid content of 0.06 moles per 1000 grams of food composition or less.

9. The method of any one of Claims 1 to 8 wherein the food composition has sodium content of 0.5 moles per 1000 grams of food composition or less.

10. The method of any one of Claims 1 to 9 wherein the food composition has sodium content of 0.3 moles per 1000 grams of food composition or less.

11. The method of any one of Claims 1 to 10 wherein the food composition has sodium content of 0.1 moles per 1000 grams of food composition or less.

12. The method of any one of Claims 1 to 11 wherein the food composition further contains an antimycotic agent in an amount effective to inhibit yeast and mold growth.

13. The method of claim 12 wherein, the antimycotic agent used in the food composition comprises sorbic acid and/or its salt thereof.

14. The method of claim 13 wherein the food composition comprises sorbic acid and/or its salt thereof at a level of 0.05% or greater.

15. The method of any one of Claims 1 to 14 wherein the food composition is selected from the group consisting of salad dressings, soups, mayonnaise, sauces, gravies, spreads, dips, salads, fillings, toppings, desserts and mixtures thereof.

16. The method of any one of Claims 1 to 16 wherein the inorganic acid is selected from the group consisting of hydrochloric acid, sulfuric acid, sodium bisulfate, potassium bisulfate and mixtures thereof.

17. A shelf-stable, high moisture, reduced sourness food composition prepared by a method comprising preparing a foodstuff with an acidulant selected from the group consisting of a membrane acidic electrodialyzed composition, an edible inorganic acid, an edible metal salt of an inorganic acid, and a mixture thereof in an amount effective for providing a food composition with a final pH of 3.5 or less, in the absence of a a pasteurization treatment, and wherein the food composition has a total organic acid content of 0.22 moles per 1000 grams of food composition or less.

18. The food composition of claim 17, wherein the foodstuff composition comprises a salad dressing.

19. The food composition of claim 18, wherein the salad dressing further includes calarants, flavors, nutrients, antioxidants, herbs, spices, fruits, vegetables, nuts and/or other food additives.

20. The food composition of claim 17, wherein the food composition is selected from the group consisting of salad dressings, soups, mayonnaise, sauces, gravies, spreads, dips, salads fillings, toppings, desserts, and mixtures thereof.

21. The food composition of any one of Claims 17 to 20 wherein the food composition has a consistency selected from the group consisting of pourable, spreadable, spoonable and cuttable or a combination thereof.

22. The food composition of any one of Claims 17 to 21 wherein the food composition comprises a reduced-fat foodstuff.

23. The food composition of any one of Claims 17 to 22 wherein the food composition contains total sweeteners in an amount less than 3% sucrose sweetness equivalent.
